## Europäisches Patentamt
## European Patent Office
## Office européen des brevets

(19)

(11) Numéro de publication : **0 296 932 B1**

(12) # FASCICULE DE BREVET EUROPEEN

(45) Date de publication du fascicule du brevet :
02.10.91 Bulletin 91/40

(51) Int. Cl.$^5$ : **C04B 35/00, C23D 5/02**

(21) Numéro de dépôt : **88401443.2**

(22) Date de dépôt : **13.06.88**

(54) Nouvelles compositions comportant des matières céramiques.

(30) Priorité : **19.06.87 FR 8708607**

(43) Date de publication de la demande :
28.12.88 Bulletin 88/52

(45) Mention de la délivrance du brevet :
02.10.91 Bulletin 91/40

(84) Etats contractants désignés :
**AT BE CH DE ES FR GB GR IT LI LU NL SE**

(56) Documents cités :
EP-A- 0 125 912
EP-A- 0 187 092
CA-A- 727 071
DE-A- 3 248 391
FR-A- 2 419 983

(56) Documents cités :
CHEMICAL ABSTRACTS, vol. 88, no. 20, 6
février 1978, page 191, résumé no. 40770z,
Columbus, Ohio, US; R.J. GLENNON et al.:
"The multifunctional role of alginates and
xanthan gum in processing alumina and other
ceramic bodies", & PROC. -FALL MEET.,
MATER. EQUIP. WHITEWARES DIV., AM.
CERAM. SOC. 1976, 81-3

(73) Titulaire : **RHONE-POULENC CHIMIE**
25, quai Paul Doumer
F-92408 Courbevoie Cédex (FR)

(72) Inventeur : **Knipper, Magali**
78, Avenue Secrétan
F-75019 Paris (FR)
Inventeur : **Schuppiser, Jean-Luc**
12 Allée d'Apollon Gressy
F-77410 Claye Souilly (FR)

(74) Mandataire : **Dubruc, Philippe et al**
RHONE-POULENC INTERSERVICES Service
Brevets Chimie 25, quai Paul-Doumer
F-92408 Courbevoie Cédex (FR)

Jouve, 18, rue Saint-Denis, 75001 PARIS

## Description

La présente invention concerne de nouvelles compositions obtenues par mélange de matières céramiques, de polysaccharides pseudoplastiques et de dispersions aqueuses de particules de polymères filmogènes, leurs utilisations, à titre d'applications, dans des procédés d'enduction de substrats et dans des procédés des fabrication de pièces céramiques frittées, ainsi que les produits obtenus par lesdits procédés.

Les compositions à base de matières céramiques sont utilisées dans de nombreux domaines techniques. On peut ainsi citer leurs utilisations dans des procédés de préparation de pièces céramiques obtenues par extrusion ou par moulage desdites compositions, puis par frittage des pièces ainsi mises en forme.

Or, la Demanderesse a pu constater que les pièces céramiques obtenues à partir des compositions décrites jusqu'alors présentent de faibles propriétés mécaniques notamment en ce qui concerne la résistance à la rupture.

Dans les procédés d'obtention de pièces céramiques par moulage, les compositions à base de charges céramiques se présentent généralement sous forme de barbotines, c'est-à-dire de compositions fluides comportant essentiellement de l'eau et des matières céramiques.

Ces mêmes types de barbotines utilisées dans les procédés de moulage, peuvent être également employées dans des procédés d'enduction et plus particulièrement dans des procédés d'émaillage de pièces céramiques ou métalliques.

Ainsi, il est décrit dans le brevet canadien n° 727071 une suspension aqueuse de gomme zanthane, comprenant notamment diverses matièreres céramiques et qui est utilisée en émaillage.

La Demanderesse a pu constater que les compositions de ce type présentaient des inconvénients tant du point de vue de la barbotine elle-même que du point de vue de son application à l'émaillage.

En effet, on a pu constater que ce type de barbotine manquait de stabilité au cours du temps, ce qui se traduit notamment par une augmentation de la viscosité de la barbotine.

Ainsi, lorsque ce type de barbotine est appliqué, par exemple par pistolettage, sur les surfaces à émailler, le débit de pulvérisation est amoindri, et on peut même arriver à une obturation complète des buses du pistolet.

D'autre part ces barbotines, pour procurer un émaillage suffisant, doivent généralement être appliquées en deux couches successives, ce qui n'empêche cependant pas la formation d'une surface émaillée présentant un aspect "moutonné". De plus, le film d'émail obtenue est fragile après ressuyage, son aspect est poudreux et rend délicat toute manipulation en cru vert. En outre les propriétés mécaniques des émaux ainsi réalisés sont insuffisantes notamment quant à la résistance à l'écrasement.

Un premier objet de l'invention est donc une composition nouvelle permettant l'obtention de pièces céramique présentant des propriétés mécaniques améliorées particulièrement en ce qui concerne la résistance à la rupture.

Un deuxième objet de la présente invention est une nouvelle composition fluide aqueuse présentant une stabilité dans le temps améliorée.

Un troisième objet de l'invention est d'obtenir par emploi de ladite composition fluide aqueuse, des surfaces enduites et plus particulièrement émaillées, pouvant n'être réalisées que par l'application d'une seule couche d'enduction, ne présentant pas d'aspect "moutonné" ni poudreux, n'étant pas fragile après ressuyage et présentant en outre des propriétés mécaniques améliorées, notamment en ce qui concerne la résistance à l'écrasement.

Dans ce but, la Demanderesse a mis au point une nouvelle composition caractérisée en ce qu'elle est obtenue par mélange d'au moins une matière céramique, d'au moins un polysaccharide pseudoplastique et d'au moins une dispersion aqueuse de particules de polymères filmogènes.

D'autres caractéristiques et avantages de l'invention apparaitront plus clairement à la lecture de la description qui va suivre.

A titre de matière céramique convenant pour la mise en oeuvre de la présente invention on peut utiliser toutes matières céramiques frittables, soit du type oxyde, comme par exemple la silice, les silicates tels que mullite, cordiérite, felspath ; l'alumine ; les aluminates tels que spinelles, wallastonite ; les aluminosilicates tels que les argiles ; l'oxyde de titane ; les titanates tels que ceux de baryum ou de magnésium ; la magnésie ; la zircone ; les oxydes de terres rares tels que les oxydes de thorium, de cérium ; soit du type non oxyde comme par exemple le carbure de bore, le carbure de silicium ou le nitrure de silicium, soit enfin du type mixte comme par exemple, l'oxynitrure de silicium et d'aluminium (Sialon).

Bien entendu, cette liste de composés n'est nullement limitative et n'est donnée qu'à titre d'exemple.

On peut également utiliser des mélanges de matières céramiques.

La composition selon l'invention comprend également au moins un polysaccharide pseudoplastique.

Comme polysaccharide pseudoplastique, on peut utiliser des gommes naturelles d'origine végétale ou animale, des gommes naturelles modifiées ou des biogommes. Ces polysaccharides sont généralement employés

2

sous forme de poudre ou de solution.

A titre de gommes naturelles, on peut citer les alginates, la gomme de guar, la gomme de caroube, la gomme de Tara, la gomme de cassia, la gomme de Karaya, les carraghénates.

Comme gommes naturelles modifiées pouvant entrer dans le cadre de la présente invention, on peut mentionner les dérivés de la cellulose comme la méthylcellulose et ses dérivés, l'hydroxypropylméthylcellulose, la carboxyméthylcellulose, l'éthylméthylcellulose, l'hydroxyéthylcellulose, l'hydroxypropylcellulose, ainsi que, d'une manière générale, les autres dérivés hydroxyalkylés de la cellulose.

Les biogommes sont des polysaccharides de poids moléculaire élevé, généralement supérieur à un million, obtenus par fermentation d'un hydrate de carbone sous l'action d'un microorganisme.

Comme biogommes pouvant être utilisées dans la composition faisant l'objet de la présente invention, on peut citer celles obtenues par fermentation sous l'action de bactéries ou de champignons appartenant au genre Xanthomonas telles que Xanthomonas begoniae, Xanthomonas campestris, Xanthomonas carotae, Xanthomonas hederae, Xanthomonas incanae, Xanthomonas malvacearum, Xanthomonas papavericola, Xanthomonas phaseoli, Xanthomonas pisi, Xanthomonas vasculorum, Xanthomonas vesicatoria, Xanthomonas vitians, Xanthomonas pelargonii ; au genre Arthrobacter et plus particulièrement les espèces Arthrobacter stabilis, Arthrobacter viscosus ; au genre Erwinia ; au genre Azotobacter et plus particulièrement l'espèce Azotobacter indicus ; au genre Agrobacter et plus particulièrement les espèces Agrobacterium radiobacter, Agrobacterium rhizogènes, Agrobacter tumefaciens ; au genre Alcaligènes et plus particulièrement l'espèce Alcaligènes faecalis ; au genre Rhizobium ; au genre Sclerotium et plus particulièrement les espèces Sclerotium rolfsii et Sclerotium glucanicum ; au genre Corticium ; au genre Sclerotinia ; au genre Stromatinia.

Comme biogommes pouvant être obtenues par fermentation par les microorganismes décrits ci-dessus, on peut citer la gomme xanthane, el scléroglucane, le succinoglycane ou l'hétéropolysaccharide S-194 décrit notamment dans la demande de brevet N° 77680 européen.

Parmi les polysaccharides pseudoplastiques précités, on préfère tout particulièrement dans le cadre de la présente invention la gomme xanthane, du fait de ses intéressantes propriétés rhéologiques et de sa pseudoplasticité élevée. La gomme xanthane est disponible dans le commerce en différents grades industriels.

La liste des polysaccharides pseudoplastiques cités ci-dessus n'est donnée qu'à titre d'exemple. On peut également utiliser des mélanges de polysaccharides pseudoplastiques.

Les dispersions aqueuses de particules de polymères filmogènes utilisables dans la composition selon l'invention sont également désignés sous le terme "latex". Ils présentent avantageusement une température minimale de formation de film (TMFF) inférieure à 50°C, et de préférence inférieure à 40°C.

Ils peuvent notamment être des latex d'homopolymères ou de copolymères vinyliques ou acryliques résultant de la polymérisation de monomères comportant en général de 2 à 14 atomes de carbone et une ou deux liaisons éthyléniques.

Comme exemples de polymères on peut citer les copolymères de styrène et de butadiène ; les homo ou copolymères de poids moléculaire inférieur à environ 500 000, dérivés de monomères acrylique et/ou méthacrylique tels que les acrylates ou méthacrylates de méthyle, éthyl, propyle, butyle, et les copolymères dérivés desdits monomères acryliques ou méthacryliques avec le styrène ; les homopolymères dérivés des esters vinyliques d'acides aliphatiques saturés ayant jusqu'à 10 atomes de carbone tels que le polyacétate de vinyle, le polypropionate de vinyle et les copolymères de tels esters avec les oléfines inférieures en $C_2$-$C_4$, avec le "versatate" de vinyle, avec les monomères acryliques ou méthacryliques cités ci-dessus ou avec les esters de l'acide maléique ou de l'acide fumarique ayant de préférence de 1 à 4 atomes de carbone dans le radical alcoyle.

La concentration en particules de polymères dispersées dans le latex est généralement comprise entre 30 et 65% en poids et de préférence entre 45 et 60% en poids par rapport au poids total dudit latex.

Le diamètre des particules est généralement compris entre 0,03 et 5 μm et de préférence entre 0,05 et 1 μm (micron).

Le pH de la dispersion aqueuse de particules de polymères est généralement compris entre 4 et 9.

Un latex tout particulièrement préféré dans le cadre de la présente invention est une dispersion aqueuse de particules d'un copolymère dérivé de monomères d'ester acrylique et de styrène dont la concentration est de 50% en poids dudit latex, le pH égal à 8, le diamètre des particules étant de 0,1 micron et la TMFF de 16°C.

Un tel latex est commercialisé par la société RHONE-POULENC sous la dénomination "Rhodopas DS 910".

Les composition selon la présente invention peuvent en outre comporter des adjuvants dont la nature va dépendre des applications ultérieures de ladite composition et qui sont décrits plus loin.

La composition selon l'invention peut comporter de 0,01 à 2%, et de préférence de 0,1 à 1%, en poids de polysaccharides pseudoplastiques par rapport au poids total de la composition ainsi que de 0,15 à 5% et de préférence de 0,25 à 2% en poids de matières sèches de la dispersion aqueuse de particules de polymères filmogènes par rapport au poids total de la composition.

La composition selon l'invention peut être obtenue par exemple par mélange des matières céramiques, du polysaccharide pseudoplatique et de la dispersion aqueuse de particules de polymères filmogènes dans un broyeur (par exemple un broyeur à boulet) ou dans un malaxeur.

Afin de réaliser des compositions fluides on rajoute de l'eau à la composition ainsi obtenue. La quantité d'eau nécessaire est principalement fonction de la nature des matières céramiques et est telle que la composition fluide présente une rhéologie adéquate, déterminable par l'homme de l'art selon les application ultérieures de ladite compostion.

Les compositions selon la présente invention peuvent entrer dans des procédés de préparation de pièces céramiques frittées. Ces procédés comportent généralement les étapes suivantes :

— on met en forme la composition selon l'invention ;

— on sèche éventuellement la composition formée ;

— puis on fritte la composition séchée.

La mise en forme peut se faire de différentes manières selon que la composition est fluide ou non.

Ainsi, quand elle est non fluide, la composition peut être mise en forme par extrusion. La compositon est alors introduite dans un appareil d'extrusion sous une forme pâteuse obtenue par addition d'une quantité adéquate d'eau. Dans cette éventualité il est possible d'ajouter à la composition selon l'invention des adjuvants classiques d'extrusion (plastifiant, lubrifiant..).

Quand elle est fluide, la composition de l'invention peut être mise en forme par moulage.

L'introduction de la composition fluide aqueuse dans le moule peut se faire par injection ou par coulage.

Des adjuvants classiques du moulage peuvent alors être ajoutés à la composition fluide.

Les pièces céramiques obtenues par extrusion ou par moulage sont, une fois formée, le plus souvent séchées à des températures comprises entre 20 et 150°C.

Puis elles sont frittées, c'est-à-dire qu'on les cuit jusqu'à obtention d'un produit dense.

Les pièces céramiques obtenues à partir de la composition selon l'invention, par exemple au moyen d'un procédé tel que décrit ci-dessus, présentent des propriétés mécaniques améliorées, notamment du point de vue de la résistance mécanique à la rupture.

Les compositions fluides aqueuses selon l'invention peuvent être également employées dans des procédés d'enduction de surface et plus particulièrement dans des procédés d'émaillage.

Un procédé d'émaillage selon l'invention consiste en l'obtention d'un substrat revêtu d'un matériau céramique fritté, réalisé selon les étapes suivantes :

— on enduit au moins partiellement ledit substrat avec une composition fluide aqueuse selon l'invention ;

— on opère éventuellement un séchage du substrat enduit ;

— on fritte le substrat enduit.

Les compositions fluides aqueuses employées préférentiellement dans les procédés d'émaillage selon l'invention sont celles qui comportent à titre de matières céramiques de la silice, des silicates tel que le feldspath, ; des aluminosilicates tels que les argiles, la wallastonite.

Des adjuvants classiques d'émaillage peuvent être incorporés à la composition fluide aqueuse selon l'invention comme des fondants tels que la craie, le talc, le carbonate de calcium, l'oxyde de plomb, l'oxyde de sodium, l'oxyde de potassium ; des opacifiants tels que l'oxyde de zinc, l'oxyde d'étain ; des colorants tels que les oxydes métalliques comme l'oxyde de cuivre.

En raison de la présence dans la composition selon l'invention de polysaccharides pseudoplastiques d'origine naturelle ou de biogomme, il peut être important d'y incorporer des additifs biocides tels que le formaldéhyde, les dérivés du pentachlorophénol comme le CRYPTOGIL NA commercialisé par la société RHONE-POULENC, ou les dérivés du dichlorophène. La composition selon l'invention peut comporter de 0,005 à 0,2 et de préférence de 0,01 à 0,1% en poids de biocides par rapport au poids du polysaccharide pseudoplastique présent.

Les substrats préférentiellement enduits par la composition fluide aqueuse selon l'invention sont de nature céramique ou métallique.

L'opération d'enduction du substrat par ladite composition se fait par tout moyen connu et notamment par trempage, par aspersion ou par pulvérisation.

La pulvérisation peut se faire au moyen d'un pistolet fonctionnant à l'air comprimé.

Le substrat enduit est ensuite généralement séché à des températures comprises entre 20 et 150°C.

Une fois séché, ledit substrat enduit est fritté c'est-à-dire qu'on le cuit jusqu'à obtention d'un produit dense.

Les supports émaillés ainsi obtenus présentent de très bonnes propriétés mécaniques notamment quant à la résistance à la rupture ; l'émail ne présente pas d'aspect "moutonné" et n'est pas fragile après ressuyage; son aspect n'est pas poudreux ; les manipulations de la pièce sont facilitées ; une seule couche d'enduction est suffisante bien que pour obtenir une épaisseur plus importante d'émail, il est tout à fait envisageable d'appliquer une ou plusieurs autres couches de composition selon l'invention sur le support émaillé.

Les exemples suivants sont donnés à titre indicatif et ne peuvent être considérés comme une limite du domaine et de l'esprit de l'invention.

## Exemples 1 à 11

Ces exemples ont été réalisés à partir de diverses compositions destinées à l'émaillage. Lesdites compositions sont obtenues par mélange dans un broyeur de matières céramiques, de gomme xanthane et d'une dispersion aqueuse de particules de copolymères filmogènes.

Ces compositions selon l'invention sont désignées par des lettres majuscules.

A titre comparatif, on a également réalisé des compositions obtenues par mélange dans un broyeur des mêmes matières céramiques et de gomme xanthane, mais ne comportant pas de dispersion aqueuse de particules de copolymères filmogènes.

Ces compositions données à titre comparatif sont ici désignés par des lettres minuscules.

Dans cette série d'exemples, les matières céramiques utilisées sont sous forme d'une formule I qui comprend outre les matières céramiques proprement dites, des adjuvants d'émaillage.

La formule I comprend :

| | |
|---|---|
| Feldspath | 40% |
| Silice | 20% |
| Oxyde de Zinc | 15% |
| Craie | 10% |
| Talc | |
| Fritte | 15% |
| Colorant | |

Les pourcentages sont exprimés en poids.

La gomme xanthane employée dans ces exemples est du RHODOPOL 23 commercialisé par la société RHONE-POULENC.

La dispersion aqueuse de particules de copolymères est un "latex" RHODOPAS DS 910, commercialisé par la société RHONE-POULENC. Ce latex présente un extrait sec de 50% en poids, un pH égal à 8, une température minimale de formation de film de 16°C et un diamètre de particules de 0,1 micron.

Dans cette série d'exemples, les compositions selon l'invention ou celles données à titre comparatif sont destinées à l'émaillage ; c'est pourquoi elles sont additionnées d'eau pour former des barbotines.

Les proportions des constituants entrant dans les différentes barbotines sont données dans le tableau I suivant :

Tableau I

| Barbotine | % Formule I | % Rhodopol | % Rhodopas DS 910 | % eau |
|---|---|---|---|---|
| a | 65 | 0,1 | 0 | 34,9 |
| A | 65 | 0,1 | 1 | 33,9 |
| b | 65 | 0,2 | 0 | 34,8 |
| B | 65 | 0,2 | 1 | 33,8 |
| c | 65 | 0,3 | 0 | 34,7 |
| C | 65 | 0,3 | 1,5 | 33,2 |
| d | 65 | 0,4 | 0 | 34,6 |
| D | 65 | 0,4 | 1 | 33,5 |

Les pourcentages sont donnés en poids par rapport au poids total de la composition.

Exemples 1 et 2

Dans ces exemples, on a testé la stabilité des barbotines au cours du temps.

Pour se faire, la viscosité de ces barbotines a été mesurée au moyen d'un Rhéomat 30 de Contraves à système Couette, au septième puis au vingtième jour après la formation desdites barbotines.

Les résultats obtenus figurent dans le tableau II suivant :

## Tableau II

| Exemples | Barbotines | Viscosité en mPa.s $(à\ 0,9\ s^{-1})$ | | Variation de la viscosité dans le temps |
|---|---|---|---|---|
| | | au 7ème jour | au 20ème jour | |
| 1 | c | 9 300 | 4 560 | 51 % |
| 2 | C | 7 260 | 6 700 | 7 % |

Ces exemples montrent clairement que les barbotines comportant un polysaccharide et un latex conformément à l'invention présentent une variation de viscosité dans le temps, et donc une stabilité, nettement améliorée.

### Exemples 3 à 6

Dans ces exemples, on a testé les propriétés mécaniques, et plus particulièrement la résistance mécanique à l'écrasement de galettes d'émail obtenues à partir de barbotines dont les compositions sont décrites dans le tableau I. Lesdites galettes d'émail ont été réalisées par filtration de barbotines sous une pression de 5 bar, à travers un papier filtre.

Des galettes d'émail raffermies de 90 mm de diamètre et de 6 à 8 mm sont obtenues. Elles sont ensuite étuvées à 50°C pendant 48 heures, puis à 110°C pendant deux heures.

La mesure de la résistance mécanique à l'écrasement est réalisée à l'aide d'une presse INSTROM.

Les résultats obtenus figurent au tableau III ci-dessous.

Tableau III

| Exemple | Barbotine de départ | Résistance mécanique à l'écrasement (en kgf/cm$^2$) |
|---|---|---|
| 3 | b | 11 |
| 4 | B | 24 |
| 5 | c | 13,3 |
| 6 | C | 32,7 |

### Exemples 7 et 8

Dans ces exemples, on a mesuré le débit de pistolettage de barbotines dont les compositions sont décrites dans le tableau I. Le pistolettage a été effectué au moyen d'un pistolet VGA 5027 dont la pression d'air est de 4 bar.

Les résultats obtenus figurent dans le tableau IV.

Tableau IV

| Exemple | Barbotine | Débit de pistolettage (en l/minute) |
|---|---|---|
| 7 | b | 2,26 |
| 8 | B | 3,5 |

### Exemples 9 et 10

Dans ces exemples, on a mesuré le temps de ressuyage qui est le temps nécessaire à l'évaporation de la couche superficielle d'eau après émaillage.

Dans ces exemples, l'émaillage a été réalisé par enduction de pièces de porcelaine au moyen de barbotines dont la composition est décrite dans le Tableau I.

Les résultats obtenus figurent au Tableau V.

## Tableau V

| Exemple | Barbotine de départ | Temps de ressuyage (en secondes) |
|---------|--------------------|--------------------------------|
| 9 | b | 30 |
| 10 | B | 25 |

### Exemple 11

Dans cet exemple, on a réalisé des émaux par enduction de pièces de porcelaine par des barbotines dont les compositions sont décrites dans le Tableau I.

On a constaté que les émaux obtenus à partir des barbotines b et c ont un aspect "moutonné" et un émail poudreux au toucher après ressuyage, alors que les émaux obtenus à partir des barbotines B et C ne présentent pas ces inconvénients.

### Exemples 12 à 15

On réalise des barbotines contenant de la gomme xanthane et différentes proportions de latex Rhodopas DS 910 (qui sont identiques à ceux employés dans les exemples précédents), ainsi que la formule II suivante:

Titanate de Baryum : 98,5 g
Darvant 7 : 1,5 g

Le titanate de baryum représente la matière céramique.

Le Darvant 7 est un polyélectrolyte dispersant, à 25% en solution aqueuse et qui est commercialisé par la société R.T. Vanderbilt.

Lesdites barbotines sont ensuite coulées dans des moules de plâtre, puis elles sont séchées pendant 12 heures à température ambiante et pendant 2 heures à 120°C.

On obtient des disques de 23 mm de diamètre et de 4 mm d'épaisseur.

Des tests de résistance à la rupture de ces disques crus ont été réalisés à l'aide d'un dynamomètre Zwick.

Les résultats sont rassemblés dans le Tableau VI suivant :

Tableau VI

| Exemple | Composition de la barbotine de départ | | | | Résistance à la rupture (MPa) |
|---|---|---|---|---|---|
| | % Gomme Xanthane | % Latex Rhodopas DS 910 | % Formule A | % Eau | |
| 12 | 0,6 | 0 | 62 | 37,4 | 2,46 |
| 13 | 0,6 | 1 | 62 | 36,5 | 3,92 |
| 14 | 0,6 | 1,5 | 62 | 35,9 | 5,12 |
| 15 | 0,6 | 2 | 62 | 34,5 | 4,90 |

Les exemples 12 à 15 montrent clairement que les pièces céramiques obtenues à partir des barbotines conforment à la définition de l'invention, présentent une résistance à la rupture améliorée.

## Exemples 16 à 19

On opère de manière analogue aux exemples 12 à 15. La concentration en gomme xanthane est de 1,2% et les tests de résistance ont été réalisés sur des pièces crues et sur des pièces frittées à 1350°C.

Les résultats sont rassemblés dans le Tableau VII ci-dessous.

EP 0 296 932 B1

## Tableau VII

| :Exemple: | Composition de la barbotine de départ | | | | :Résistance à la rupture: (en MPa) | |
|---|---|---|---|---|---|---|
| | % Gomme Xanthane | % Latex Rhodopas: DS 910 | % Formule: A | % Eau | pièce crue | pièce cuite |
| 16 | 1,2 | 0 | 62 | 36,8 | 3,91 | 39,8 |
| 17 | 1,2 | 1 | 62 | 35,8 | 6,55 | 43,8 |
| 18 | 1,2 | 1,5 | 62 | 35,3 | 6,87 | 46,9 |
| 19 | 1,2 | 2 | 62 | 34,8 | 9,08 | 44,1 |

## Revendications

1. Composition caractérisée en ce qu'elle est obtenue par mélange d'au moins une matière céramique, d'au moins un polysaccharide pseudoplastique et d'au moins une dispersion aqueuse de particules de polymères filmogènes.

2. Composition selon la revendication 1 caractérisée en ce que ladite composition est dispersée dans de l'eau.

3. Composition selon l'une des revendications 1 ou 2 caractérisée en ce que la dispersion aqueuse de particules de polymères filmogènes présente une température minimale de formation de film inférieure à 50°C.

4. Composition selon l'une des revendications 1 à 3 caractérisée en ce que la dispersion aqueuse de particules de polymères filmogènes présente une température minimale de formation de film inférieure à 40°C.

5. Composition selon l'une des revendications 1 à 4 caractérisée en ce que la dispersion aqueuse de particules de polymères filmogènes précitée est une dispersion aqueuse d'un homopolymère ou d'un copolymère vinylique et/ou acrylique résultant de la polymérisation de monomères comportant de 2 à 14 atomes de carbone et 1 ou 2 liaisons éthyléniques.

6. Composition selon l'une des revendications précédentes caractérisée en ce que ladite dispersion aqueuse de particules de polymères filmogènes est une dispersion aqueuse de copolymères de styrène et de butadiène ; d'homocopolymères ou de copolymères de poids moléculaire inférieur à 500 000, dérivés de monomères acryliques et/ou méthacryliques ; des copolymères dérivés desdits monomères acryliques ou méthacryliques avec le styrène ; d'homopolymères dérivés des esters vinyliques d'acides aliphatiques saturés ayant jusqu'à 10 atomes de carbone et des copolymères desdits esters avec les oléfines inférieures en $C_2$-$C_4$, avec le versatate de vinyle, avec les monomères acryliques ou méthacryliques précités ou avec les esters de l'acide maléique ou de l'acide fumarique ayant de préférence de 1 à 4 atomes de carbone dans le radical alcoyle.

11

7. Composition selon l'une des revendications précédentes caractérisée en ce que la concentration en particules de polymères dans la dispersion aqueuse précitée est comprise entre 30 et 65% en poids par rapport au poids total de ladite dispersion aqueuse.

8. Composition selon l'une des revendications précédentes caractérisée en ce que le diamètre des particules de ladite dispersion aqueuse est compris entre 0,03 et 5 µm (microns).

9. Composition selon l'une des revendications précédentes caractérisée en ce que ladite composition comprend de 0,15 à 5% en poids de matières sèches de la dispersion aqueuse de particules de polymères filmogènes par rapport au poids total de ladite composition.

10. Composition selon la revendication 9 caractérisée en ce que ladite composition comprend de 0,25 à 2% en poids de matières sèches de la dispersion aqueuse de particules de polymères filmogènes par rapport au poids total de la composition.

11. Composition selon l'une des revendications précédentes caractérisée en ce que les polysaccharides pseudoplastiques sont des gommes d'origines végétales ou animales, des gommes naturelles modifiées ou des biogommes obtenues par fermentation d'hydrate de carbone par des microorganismes.

12. Composition selon la revendication 11 caractérisée en ce que lesdites biogommes sont obtenues par fermentation d'hydrate de carbone par des bactéries ou des champignons appartenant aux genres Xanthomonas, Arthrobacter, Azotobacter, Agrobacter, Alcaligènes, Erwinia, Rhizobium, Corticium, Sclerotinia, Stromatinia ou Sclerotium.

13. Composition selon l'une des revendications 11 ou 12 caractérisée en ce que les biogommes sont la gomme xanthane, le scléroglucane ou le succinoglycane.

14. Composition selon l'une des revendications précédentes caractérisée en ce que ladite composition comprend de 0,01 à 2% en poids de polysaccharides pseudoplastiques par rapport au poids total de la composition.

15. Composition selon la revendication 14 caractérisée en ce que ladite composition comprend de 0,1 à 1% en poids de polysaccharides pseudoplastiques par rapport au poids total de la composition.

16. Composition selon l'une des revendications précédentes caractérisée en ce que les matières céramiques sont des matières céramiques frittables.

17. Composition selon la revendication 1 caractérisée en ce que les matières céramiques frittables sont choisies parmi les oxydes métalliques et/ou les oxydes de silicium.

18. Procédé d'obtention d'un substrat revêtu d'un matériau céramique fritté du type comportant les étapes suivantes :

a) on enduit au moins partiellement ledit substrat avec une composition à base de matières céramiques,

b) on opère éventuellement un séchage du substrat enduit,

c) on fritte le substrat enduit, ledit procédé étant caractérisé en ce que la composition précitée est une composition selon l'une des revendications 1 à 17.

19. Procédé selon la revendication 18 caractérisé en ce que le substrat est de nature céramique ou métallique.

20. Procédé selon l'une des revendications 18 ou 19 caractérisé en ce que l'opération de séchage est réalisée à des températures comprises entre 20 et 150°C.

21. Procédé selon l'une des revendications 18 à 20 caractérisé en ce que l'opération de frittage est réalisée à une température permettant l'obtention d'un produit dense.

22. Procédé selon l'une quelconque des revendications 18 à 21 caractérisé en ce que l'opération d'enduction au moins partielle du substrat se fait par trempage, aspersion ou pulvérisation.

23. Procédé selon l'une des revendication 18 à 22 caractérisé en ce que les matières céramiques de la composition selon l'une des revendications 1 à 17 sont la silice, des silicates et/ou des alumino-silicates.

24. Procédé selon l'une des revendications 18 à 23 caractérisé en ce que la composition selon l'une des revendications 1 à 17 comporte des adjuvants classiques d'émaillage.

25. Procédé de fabrication d'une pièce céramique frittée du type comportant les étapes suivantes :

a) on met en forme une composition à base de matières céramiques,

b) on sèche éventuellement la composition formée,

c) on fritte la composition formée, ledit procédé étant caractérisé en ce que la composition précitée est une composition selon l'une des revendications 1 à 17.

26. Procédé selon la revendication 25 caractérisé en ce que ladite pièce céramique est mise en forme par moulage.

27. Procédé selon la revendication 26 caractérisé en ce que ladite pièce céramique est mise en forme par moulage réalisé par injection ou par coulage de la composition.

28. Procédé selon la revendication 25 caractérisé en ce que ladite pièce céramique frittée est mise en forme par extrusion.

29. Procédé selon l'une des revendications 25 à 28 caractérisé en ce que la température de séchage est comprise entre 20 et 150°C.

30. Procédé selon l'une des revendications 25 à 29 caractérisé en ce que l'opération de frittage est réalisée à une température permettant l'obtention d'un produit dense.

## Patentansprüche

1. Masse, dadurch gekennzeichnet, daß sie durch Vermischen von mindestens einem keramischen Material, mindestens einem pseudoplastischem Polysaccharid und mindestens einer wäßrigen Dispersion von Teilchen von filmbildenden Polymeren erhalten worden ist.

2. Masse nach Anspruch 1, dadurch gekennzeichnet, daß die Masse in Wasser dispergiert ist.

3. Masse nach einem der Ansprüche 1 oder 2, dadurch gekennzeichnet, daß die wäßrige Dispersion von Teilchen filmbildender Polymerer eine Mindesttemperatur der Filmbildung unterhalb 50°C aufweist.

4. Masse nach einem der Ansprüche 1 bis 3, dadurch gekennzeichnet, daß die wäßrige Dispersion von Teilchen filmbildender Polymerer eine Mindesttemperatur der Filmbildung unterhalb 40°C aufweist.

5. Masse nach einem der Ansprüche 1 bis 4, dadurch gekennzeichnet, daß die vorsgenannte wäßrige Dispersion von Teilchen filmbildender Polymerer eine wäßrige Dispersion eines Homopolymeren oder eines Copolymeren auf Vinylbasis und/oder Acrylbasis ist, das durch die Polymerisation von Monomeren mit 2 bis 14 Kohlenstoffatomen und 1 oder 2 ethylenischen Bindungen erhalten wird.

6. Masse nach einem der vorangehenden Ansprüche, dadurch gekennzeichnet, daß die wäßrige Dispersion von Teilchen filmbildender Polymerer eine wäßrige Dispersion von Copolymeren aus Styrol und Butadien, von Homopolymeren oder Copolymeren mit einem Molekulargewicht unter 500 000, die sich von Acryl- und/oder Methacryl-Monomeren ableiten, von Copolymeren, die sich von den genannten Acryl- oder Methacryl-Monomeren und Styrol ableiten, von Homopolymeren, abgeleitet von Vinylestern aliphatischer gesättigter Säuren mit bis zu 10 Kohlenstoffatomen und von Copolymeren dieser Ester mit niederen $C_2$-$C_4$-Olefinen, mit dem Vinylversatat, mit den vorgenannten Acryl- oder Methacryl-Monomeren oder mit den Estern der Maleinsäure oder der Fumarsäure mit vorzugsweise 1 bis 4 Kohlenstoffatomen in der Alkylgruppe ist.

7. Masse nach einem der vorangehenden Ansprüche, dadurch gekennzeichnet, daß die Konzentration der Polymerteilchen in der vorgenannten wäßrigen Dispersion 30 bis 65 Gew.-% ausmacht, bezogen auf das Gesamtgewicht der wäßrigen Dispersion.

8. Masse nach einem der vorangehenden Ansprüche, dadurch gekennzeichnet, daß der Durchmesser der Teilchen in der wäßrigen Dispersion im Bereich von 0,03 bis 5 µm liegt.

9. Masse nach einem der vorangehenden Ansprüche, dadurch gekennzeichnet, daß die Masse 0,15 bis 5 Gew.-% Feststoffe der wäßrigen Dispersion von Teilchen filmbildender Polymerer, bezogen auf das Gesamtgewicht der Masse, enthält.

10. Masse nach Anspruch 9, dadurch gekennzeichnet, daß die Masse 0,25 bis 2 Gew.-% Feststoffe der wäßrigen Dispersion von Teilchen filmbildender Polymerer, bezogen auf das Gesamtgewicht der Masse, enthält.

11. Masse nach einem der vorangehenden Ansprüche, dadurch gekennzeichnet, daß die pseudoplastischen Polysaccharide Gummen pflanzlicher oder tierischer Herkunft, modifizierte natürliche Gummen oder Biogummen, erhalten durch Fermentation von Kohlenhydraten mittels Mikroorganismen, sind.

12. Masse nach Anspruch 1, dadurch gekennzeichnet, daß die Biosummen durch Kohlenwasserstoff-Fermentation mittels Bakterien oder Pilzen der Arten Xanthomonas, Arthrobacter, Azotobacter, Agrobacter, Alcaligenes, Erwinia, Rhizobium, Corticium, Sclerotinia, Stromatinia oder Sclerotium erhalten worden sind.

13. Masse nach einem der Ansprüche 11 oder 12, dadurch gekennzeichnet, daß die Biogummen Xanthangummi, Skleroglucan oder Succinoglycan sind.

14. Masse nach einem der vorangehenden Ansprüche, dadurch gekennzeichnet, daß die Masse 0,01 bis 2 Gew.-% pseudoplastische Polysaccharide, bezogen auf das Gesamtgewicht der Masse, enthält.

15. Masse nach Anspruch 14, dadurch gekennzeichnet, daß die Masse 0,1 bis 1 Gew.-% pseudoplastische Polysaccharide, bezogen auf das Gesamtgewicht der Masse, enthält.

16. Masse nach einem der vorangehenden Ansprüche, dadurch gekennzeichnet, daß die keramischen Materialien sinterbare keramische Materialien sind.

17. Masse nach Anspruch 1, dadurch gekennzeichnet, daß die sinterbaren keramischen Materialien unter den Metalloxiden und/oder Oxiden von Silicium ausgewählt sind.

18. Verfahren zur Herstellung eines Substrats, überzogen mit einem gesinterten keramischen Material der Art, die folgende Stufen umfaßt :

a) man beschichtet zumindest teilweise das Substrat mit einer Masse auf der Basis von keramischen Mate-

EP 0 296 932 B1

rialien,

b) man trocknet gegebenenfalls das beschichtete Substrat,

c) man sintert das beschichtete Substrat, dadurch gekennzeichnet, daß die vorgenannte Masse eine Masse nach einem der Ansprüche 1 bis 17 ist.

19. Verfahren nach Anspruch 18, dadurch gekennzeichnet, daß das Substrat keramischer oder metallischer Natur ist.

20. Verfahren nach einem der Ansprüche 18 oder 19, dadurch gekennzeichnet, daß man bei Temperaturen im Bereich von 20 bis 150°C trocknet.

21. Verfahren nach einem der Ansprüche 18 bis 20, dadurch gekennzeichnet, daß man bei einer Temperatur sintert, bei der ein dichtes Produkt erhalten werden kann.

22. Verfahren nach einem der Ansprüche 18 bis 21, dadurch gekennzeichnet, daß man das Substrat mittels Tauchen, Walzenauftrag oder Versprühen zumindest teilweise beschichtet.

23. Verfahren nach einem der Ansprüche 18 bis 22, dadurch gekennzeichnet, daß die keramischen Materialien der Masse nach einem der Ansprüche 1 bis 17 Kieselsäure, Silicate und/oder Aluminiumsilicate sind.

24. Verfahren nach einem der Ansprüche 18 bis 23, dadurch gekennzeichnet, daß die Masse nach einem der Ansprüche 1 bis 17 klassische Zusätze für das Emaillieren enthält.

25. Verfahren zur Herstellung eines gesinterten keramischen Werkstücks der Art, die folgende Stufen umfaßt:

a) man formt eine Masse auf der Basis von keramischen Materialien,

b) man trocknet gegebenenfalls die geformte Masse,

c) man sintert die geformte Masse, dadurch gekennzeichnet, daß die vorgenannte Masse eine Masse nach einem der Ansprüche 1 bis 17 ist.

26. Verfahren nach Anspruch 25, dadurch gekennzeichnet, daß die Formgebung des keramischen Werkstückes mittels spanloser Verformung erfolgt.

27. Verfahren nach Anspruch 26, dadurch gekennzeichnet, daß die Formgebung des keramischen Werkstückes durch spanlose Verformung mittels Spritzgießen oder Gießen der Masse realisiert wird.

28. Verfahren nach Anspruch 25, dadurch gekennzeichnet, daß die Formgebung des gesinterten keramischen Werkstückes mittels Strangpressen erfolgt.

29. Verfahren nach einem der Ansprüche 25 bis 28, dadurch gekennzeichnet, daß die Temperatur beim Trocknen im Bereich von 20 bis 150°C liegt.

30. Verfahren nach einem der Ansprüche 25 bis 29, dadurch gekennzeichnet, daß man das Sintern bei einer Temperatur durchführt, bei der ein dichtes Produkt erhalten werden kann.

## Claims

1. A composition characterised in that it is produced by mixing at least one ceramic material, at least one pseudoplastic polysaccharide and at least one aqueous dispersion of particles of film-forming polymers.

2. A composition according to claim 1 characterised in that said composition is dispersed in water.

3. A composition according to one of claims 1 and 2 characterised in that the aqueous dispersion of particles of film-forming polymers has a minimum film-forming temperature of lower than 50°C.

4. A composition according to one of claims 1 to 3 characterised in that the aqueous dispersion of particles of film-forming polymers has a minimum film-forming temperature of lower than 40°C.

5. A composition according to one of claims 1 to 4 characterised in that the aqueous dispersion of particles of film-forming polymers is an aqueous dispersion of a vinyl and/or acrylic polymer or copolymer resulting from the polymerisation of monomers comprising from 2 to 14 carbon atoms and 1 or 2 ethylenic bonds.

6. A composition according to one of the preceding claims characterised in that said aqueous dispersion of particles of film-forming polymer is an aqueous dispersion of copolymers of styrene and butadiene; homopolymers or copolymers of a molecular weight of less than 500,000, derived from acrylic and/or methacrylic monomers; copolymers derived from said acrylic or methacrylic monomers with styrene; polymers derived from vinyl esters of saturated aliphatic acids having up to 10 carbon atoms and copolymers of said esters with lower $C_2$-$C_4$ olefins, with vinyl versatate, with said acrylic or methacrylic monomers or with the esters of maleic acid or fumaric acid, preferably having from 1 to 4 carbon atoms in the alkyl radical.

7. A composition according to one of the preceding claims characterised in that the concentration of particles of polymers in said aqueous dispersion is between 30 and 65% by weight with respect to the total weight of said aqueous dispersion.

8. A composition according to one of the preceding claims characterised in that the diameter of the particles of said aqueous dispersion is between 0.03 and 5 μm (micron).

**14**

9. A composition according to one of the preceding claims characterised in that said composition comprises from 0.15 to 5% by weight of dry matter of the aqueous dispersion of particles of film-forming polymers with respect to the total weight of said composition.

10. A composition according to claim 9 characterised in that said composition comprises from 0.25 to 2% by weight of dry matter of the aqueous dispersion of particles of film-forming polymers with respect to the total weight of the composition.

11. A composition according to one of the preceding claims characterised in that the pseudoplastic polysaccarides are gums of vegetable or animal origins, modified natural gums or biogums obtained by fermentation of carbohydrate by microorganisms.

12. A composition according to claim 11 characterised in that said biogums are produced by fermentation of carbohydrate by bacteria or fungi belonging to the geni Xanthomonas, Arthrobacter, Azotobacter, Agrobacter, Alcaligenes, Erwinia, Rhizobium, Corticium, Sclerotinia, Stromatinia or Sclerotium..

13. A composition according to one of claims 11 and 12 characterised in that the biogums are xanthane gum, scleroglucane or succinoglycane.

14. A composition according to one of the preceding claims characterised in that said composition comprises from 0.01 to 2% by weight of pseudoplastic polysaccharides with respect to the total weight of the composition.

15. A composition according to claim 14 characterised in that said composition comprises from 0.1 to 1% by weight of pseudoplastic polysaccharides with respect to the total weight of the composition.

16. A composition according to one of the preceding claim characterised in that the ceramic materials are sinterable ceramic materials.

17. A composition according to claim 1 characterised in that the sinterable ceramic materials are selected from metallic oxides and/or silicon oxides.

18. A process for producing a substrate covered with a sintered ceramic material of the type comprising the following steps :
a) at least partially coating said substrate with a composition based on ceramic materials,
b) optionally effecting drying of the coated substrate, and
c) sintering the coated substrate said process being characterised in that said composition is a composition according to one of claims 1 to 17.

19. A process according to claim 18 characterised in that the substrate is of ceramic or metallic nature.

20. A process according to one of claims 18 and 19 characterised in that the drying operation is carried out at temperatures of between 20 and 150°C.

21. A process according to one of claims 18 to 20 characterised in that the sintering operation is carried out at a temperature which permits the production of a dense product.

22. A process according to any one of claims 18 to 21 characterised in that the operation of at least partially coating the substrate is effected by dipping, sprinkling or spraying.

23. A process according to one of claims 18 to 22 characteried in that the ceramic materials of the composition according to one of claims 1 to 17 are silica, silicates and/or aluminosilicates.

24. A process according to one of claims 18 to 23 characterised in that the composition according to one of claims 1 to 17 comprises conventional enamelling additives.

25. A process for the production of a sintered ceramic part of the type comprising the following steps :
a) shaping a composition based on ceramic materials,
b) optionally drying the composition formed, and
c) sintering the composition formed, said process being characterised in that said composition is a composition according to one of claims 1 to 17.

26. A process according to claim 25 characterised in that said ceramic part is shaped by casting.

27. A process according to claim 26 characterised in that said ceramic part is shaped by casting which is effected by injecting or pouring the composition.

28. A process according to claim 25 characterised in that said sintered ceramic part is shaped by extrusion.

29. A process according to one of claims 25 to 28 characterised in that the drying temperature is between 20 and 150°C.

30. A process according to one of claims 25 to 29 characterised in that the sintering operation is carried out at a temperature which permits the production of a dense product.